# FASCICULE DE BREVET EUROPEEN

(11) **EP 1 246 719 B1**
(45) Date de publication et mention de la délivrance du brevet: **16.08.2006**
(21) Numéro de dépôt: 00985369.8
(22) Date de dépôt: 30.11.2000
(51) Int. Cl.: B32B 1/08, B32B 25/04, F16L 11/08

(54) **CANALISATION POUR FLUIDE AUTOMOBILE**
KANAL FÜR AUTOMOBILFLÜSSIGKEIT
CHANNEL FOR AN AUTOMOBILE FLUID

(30) Priorité: 09.12.1999 FR 9915533
(43) Date de publication de la demande: 09.10.2002
(73) Titulaire: NOBEL PLASTIQUES, 78300 Poissy (FR)
(72) Inventeur: GUIPPE, Jérôme, F-28630 Morancez (FR); MILHAS, Pierre, F-51300 Vitry le François (FR)
(74) Mandataire: Robert, Jean-Pierre
(86) Numéro de dépôt international: PCT/FR2000/003347
(87) Numéro de publication internationale: WO 2001/042005

(56) Documents cités:
- EP-A- 0 999 395
- US-A- 5 271 977
- US-A- 5 362 530
- US-A- 5 476 121
- US-A- 5 576 101
- DATABASE WPI Section Ch, Week 199002 Derwent Publications Ltd., London, GB; Class A35, AN 1990-012714 XP002135045 & JP 01 294034 A (TOKAI RUBBER IND LTD), 28 novembre 1989 (1989-11-28)
- "Précis de matières plastiques" 1992, AFNOR , PARIS-LA-D¹FENSE * page 136 - page 136 *

## Description

La présente invention concerne un tube ou une conduite destiné à transporter un fluide pour véhicule automobile et en particulier un liquide de refroidissement dans, par exemple, un moteur thermique (à combustion interne).

L'état de la technique connu à ce jour comprend :
- les tuyaux en caoutchouc (EPDM) armaturés ou non selon les niveaux de pression et/ou les températures du fluide qui y circule ;
- les tubes métalliques revêtus et associés à des conduits en caoutchouc (EPDM) permettant d'absorber les débattements et les vibrations engendrés par le moteur ; ces tubes en caoutchouc sont utilisés notamment au niveau des raccordements des tubes aux organes tels que le moteur, le radiateur, le vase d'expansion.... L'inconvénient de ces systèmes réside dans la masse importante de la tuyauterie étant donnée l'existence de tubes métalliques, dans une rigidité du système relativement élevée et dans les problèmes de corrosion des tubes métalliques ce, malgré le revêtement qui leur est appliqué ;
- les canalisations thermoplastiques rigides en une seule couche, telles que le polyamide (notamment le PA 66) chargé de fibre de verre ; ces canalisations sont très rigides et en conséquence possèdent l'inconvénient de transmettre des vibrations et de constituer un émetteur de bruit du fait de ces vibrations et également du fait de la circulation du fluide qui les traverse.
- les canalisations thermoplastiques possédant divers tronçons rigides et souples pour absorber les vibrations et débattements engendrés par le moteur ; il faut cependant que les parties souples soient renforcées d'une structure qui limite à la fois leur dilatation radiale et leur allongement axial ; les parties souples sont soit réalisées en une seule pièce avec les parties rigides, soit indépendamment de celle-ci et assemblées à ces parties rigides par soudure. L'inconvénient de cette technique réside essentiellement dans sa complexité et dans le nombre important d'opérations de fabrication.
- des canalisations en matériau synthétique multicouche, entièrement thermoplastique ou seulement partiellement et dans ce dernier cas la partie thermoplastique formant la couche interne de la canalisation ; l'inconvénient d'une telle canalisation réside dans sa difficulté sinon son impossibilité à la raccorder aux embouts actuels rigides (par exemple à queue de sapin), ce qui impose le recours à une pièce intermédiaire de raccordement.

Pour pallier les inconvénients de l'état de la technique, on propose selon l'invention une structure de tube de transport d'un fluide circulant dans les moteurs de véhicules automobiles et en particulier un fluide de refroidissement, qui en outre répond à un cahier des charges particulièrement sévère et ce dans des conditions économiques de production optimales. Il faut en effet que ce type de tube puisse être fabriqué de manière simple donc économique, qu'il continue de posséder une certaine rigidité permettant notamment de conserver des formes imposées avant son montage final, qu'il présente à l'égard de la perméabilité des performances très élevées et notamment beaucoup plus élevées que celles des conduits en caoutchouc utilisés jusqu'à présent et qu'enfin cette structure multicouche soit apte à encaisser des efforts d'assemblage du type emmanchement sans que les différentes couches qui la constituent se séparent sous l'effet de ces efforts.

A cet effet donc, l'invention a pour objet un tube de transport d'un fluide pour véhicule automobile tel qu'un fluide de refroidissement, qui comporte :
- une couche interne, le plus à l'intérieur du tube, en matière élastomère vulcanisée,
- une couche externe en matière thermoplastique résistant chimiquement et de bonne imperméabilité à l'égard du fluide de refroidissement, la matiere de la couche externe (2) étant apte à être thermoformée et la couche externe ayant une épaisseur adaptée pour conférer au tube une rigidité lui permettant de conserver une forme imposée par thermoformage,
- une couche intermédiaire d'un liant en une matière rendue compatible avec celles des couches interne et externe.

Une telle structure, outre les réponses satisfaisantes qu'elle apporte au cahier des charges rappelé ci-dessus, permet de construire des tubes adaptés aux performances mécaniques qui leur seront demandées. C'est ainsi que la couche interne en matériau élastomère vulcanisé sera d'une épaisseur adaptée par exemple aux dimensions des reliefs des embouts rigides sur lesquels le tube sera emmanché. De même, l'épaisseur de la couche externe en thermoplastique sera choisie en fonction de la plus ou moins grande raideur que l'on souhaite obtenir pour le tube, raideur qui sera compatible avec les niveaux de débattement et de vibration admis lorsque le tube sera installé sur le véhicule. L'épaisseur de la couche intermédiaire sera quant à elle comprise entre 1/10ème et 3/10ème de millimètre, cette couche n'ayant pas de fonction mécanique mais une simple fonction de liaison des deux couches qui l'encadrent.

Dans un mode de réalisation du tube selon l'invention, l'élastomère vulcanisé de la couche interne est choisi parmi les composants EPDM (polyoléfine élastomère), PVC nitryle, CSM (polyéthylène chlorosulfoné).

La couche externe est choisie parmi les polyamides tels que le PA6, le PA 66, le PA 12. Ce polyamide extérieur peut être avantageusement chargé de fibre de verre.

Enfin, la couche intermédiaire de liaison sera un produit à base d'éthylène, d'acrylique-ester, et d'anhydride maléique.

Dans une seconde variante de réalisation du tube selon l'invention, la structure de base susdite, à savoir une couche d'élastomère, une couche de thermoplastique et un liant intermédiaire, est recouverte d'une couche d'élastomère vulcanisé liée à la couche thermoplastique du type polyamide par une couche intermédiaire de liaison du type de celle précédemment décrite.

L'intérêt de ce revêtement réside principalement dans le fait que le tube présente à l'égard de l'atmosphère extérieure un revêtement souple qui amortit les bruits et les chocs et, par sa nature d'élastomère vulcanisé, possède une structure réticulée en trois dimensions, ce qui présente l'avantage d'offrir une assez bonne résistance au feu du fait même que cette structure ne s'effondre pas sur elle-même sous l'effet de la chaleur.

D'autres caractéristiques et avantages de l'invention apparaîtront à la lecture de la description qui suit, faite à titre d'exemple, en référence aux dessins annexés parmi lesquels :
- la figure 1 est une vue schématique en coupe transversale d'un tuyau selon un premier mode de réalisation de l'invention,
- la figure 2 est une vue en coupe schématique transversale d'un second mode de réalisation d'un tuyau conforme à l'invention.

Dans l'exemple de réalisation représenté aux figures, le tuyau selon l'invention qui est destiné à former une partie du circuit de refroidissement moteur, comprend une couche interne 1 en une matière élastomère vulcanisée dont l'épaisseur est de l'ordre de 50 à 80 % de l'épaisseur totale du tube. On citera à titre d'exemple les matières qui conviennent à la réalisation de cette couche interne : il s'agit des éthylènes-propylènes EPM, EPDM, des nitriles NBR, des polyacryliques ACM, des PVC nitriles NBR/PVC, des nitriles hydrogénés HNBR, des éthylènes acryliques AEM, des silicones MVQ, des fluorocarbonés FPM, des fluorosilicones FMQ, des isobutylènes isoprènes IIR, des isoprènes IR, des styrènes butadiène SDR, des épichloridrines EO-ECO, des polychloroprènes CR, des polyéthylènes chlorosulfonés CSM, des polyéthylènes chlorés CPE.... Cette couche en matériau élastomère a deux fonctions principales, à savoir d'une part de permettre une déformation importante tout en conservant un contact étroit avec des embouts rigides du genre tétine ou dent de sapin lors de la connexion d'un tube selon l'invention avec un organe pourvu d'un tel embout et, d'autre part, de constituer un amortisseur aux vibrations auxquelles pourrait être soumis le tube selon l'invention, vibrations pouvant avoir une origine externe ou une origine interne telle que les coups de bélier ou autres variations brutales de flux du liquide que le tube transporte.

La couche externe 2 du tube selon l'invention est une couche en polyamide et de préférence en polyamide 66, en polyamide 6, les deux chargées ou non de fibre de verre selon les performances mécaniques que l'on attend du tube ou en polyamide 12. On pourra également choisir une matière thermoplastique répondant à un certain nombre de caractéristiques qui satisfont aux critères d'homologation "classe C" relatifs à l'ensemble des fluides automobiles dans des essais normalisés par les constructeurs de véhicules automobiles. L'épaisseur de cette couche externe sera grosso modo le complément à 100% de l'épaisseur totale de l'épaisseur de la couche interne. En effet la différence existant entre l'épaisseur totale et la somme de ces deux épaisseurs est réservée à la couche de liant intermédiaire 3 (de 1 à 3/10ème de mm) cette couche intermédiaire étant en une matière rendue compatible avec les matières des couches 1 et 2 et en particulier étant un produit à base d'éthylène, d'acrylique ester et d'anhydride maléique qui est présent sur le marché sous la marque commerciale LOTADER par exemple.

La fabrication d'un tel produit est aisée car elle peut être réalisée par coextrusion de chacune des couches.

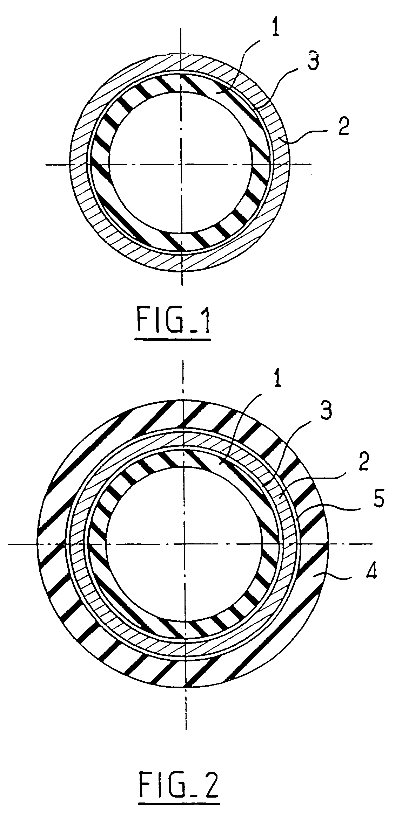

Dans une variante de réalisation représentée à la figure 2, la structure de base de la figure 1 peut être recouverte d'une autre couche 4 de matière élastomère vulcanisée, du même type que celle identifiée pour la couche 1, liée à la couche 2 par une couche de liaison 5 du même type que celle 3 décrite ci-dessus. Ce type de revêtement souple confère à la tubulure ainsi construite plusieurs qualités. D'une part son toucher est agréable et correspond au désir des constructeurs automobiles. D'autre part cette couche souple constitue un élément anti-bruit au sens où elle amortit les chocs et les vibrations auxquels serait soumise cette tubulure par l'extérieur. En troisième lieu une structure élastomère vulcanisée présente une réticulation tridimensionnelle qui constitue un facteur d'amélioration de la tenue au feu de la canalisation puisque cette structure n'a pas sous la chaleur tendance à s'effondrer sur elle-même du fait de cette réticulation tridimensionnelle.

Le tube selon l'invention présente bien entendu l'intérêt de pouvoir être thermoformé grâce à sa couche 2 en thermoplastique thermoformable. Par ailleurs, la couche interne en matière élastomère constitue pour le thermoplastique au moment du thermoformage une sorte de support pour la couche en polyamide qui permet d'éviter le croquage de la tubulure. On notera enfin que la chaleur apportée à l'ensemble au moment du thermoformage contribue à la vulcanisation de la couche interne et/ou de la couche externe.

La canalisation de l'invention convient pour de nombreux fluides automobiles (fluides de freinage ou d'assistance hydraulique de direction...).

## Revendications

1. Tube de transport d'un fluide pour véhicule automobile, en particulier de refroidissement, **caractérisé en ce qu'**il comporte :
- une couche interne (1), le plus à l'intérieur du tube, en matière élastomère vulcanisée,
- une couche externe (2) en matière thermoplastique résistant chimiquement et de bonne imperméabilité à l'égard du fluide de refroidissement, la matière de la couche externe (2) étant apte à être thermoformée et la couche externe ayant une épaisseur adaptée pour conférer au tube une rigidité lui permettant de conserver une forme imposée par thermoformage,
- une couche intermédiaire (3) d'un liant en une matière rendue compatible avec celle des couches interne et externe.

2. Tube de transport selon la revendication 1, **caractérisé en ce que** l'élastomère vulcanisé de la couche interne est choisi parmi les composants EPDM (polyéfine élastomère), PVC nitrile, CSM (polyéthylène chlorosulfoné).

3. Tube selon la revendication 2, **caractérisé en ce que** la couche externe est choisie parmi les polyamides PA6, PA66, PA12.

4. Tube selon la revendication 3, **caractérisé en ce que** le polyamide extérieur est chargé de fibre de verre.

5. Tube selon la revendication 1, **caractérisé en ce que** le liant est un produit à base d'éthylène, d'acrylique ester, et d'anhydride maléique.

6. Tube selon l'une des revendications précédentes, **caractérisé en ce qu'**il comporte une couche de revêtement (4) en matière élastomère vulcanisée recouvrant la couche en matière thermoplastique (2) et reliée à celle-ci par une couche (5) intermédiaire d'un liant en une matière rendue compatible avec la couche de revêtement (4) et la couche en matériau thermoplastique (2).

## Claims

1. A tube for transporting a motor vehicle fluid, in particular a coolant, the tube being **characterized in that** it comprises:
· an inner most layer (1) made of vulcanized elastomer material;
· an outer layer (2) made of thermoplastic material that withstands the coolant chemically and that is impermeable thereto; the material of the outer layer being thermoformable and the outer layer having a thickness adapted to confer to the tube a rigidity enabling it to retain a shape imposed by thermoforming and
· an intermediate bonding layer (3) made of a material that is compatible with the materials of the inner and outer layers.

2. A transport tube according to claim 1, **characterized in that** the vulcanized elastomer of the inner layer is chosen from the components EPDM (polyolefin elastomer), nitrile polyvinyl chloride (PVC), and chlorosulfonated polyethylene (CSM).

3. A tube according to claim 2, **characterized in that** the outer layer is chosen from the polyamides PA6, PA66, PA12.

4. A tube according to claim 3, **characterized in that** the outer polyamide is filled with glass fiber.

5. A tube according to claim 1, **characterized in that** the bonding layer is a substance based on ethylene, acrylic ester, and maleic anhydride.

6. A tube according to any preceding claim, **characterized in that** it includes a coating layer (4) made of vulcanized elastomer material covering the layer (2) made

## Patentansprüche

1. Transportleitung für ein Kraftfahrzeugfluid, insbesondere Kühlflüssigkeit, **dadurch gekennzeichnet, dass** sie umfasst:
- eine Innenschicht (1), die innerste der Leitung, aus vulkanisiertem Elastomer,
- eine Außenschicht (2) aus thermoplastischem Material, das gegenüber der Kühlflüssigkeit chemisch widerstandsfähig ist und ihr gegenüber eine gute Undurchlässigkeit hat, wobei das Material der Außenschicht (2) dazu geeignet ist, warmgeformt zu werden, und die Außenschicht eine Dicke hat, die dazu geeignet ist, der Leitung eine Steifigkeit zu verleihen, die ihr ermöglicht, eine durch Warmformen verliehene Form beizubehalten,
- eine Zwischenschicht (3) eines Bindemittels aus einem Material, das mit dem der Innenschicht und der Außenschicht kompatibel gemacht wurde.

2. Transportleitung nach Anspruch 1, **dadurch gekennzeichnet, dass** das vulkanisierte Elastosmer der Innenschicht unter den Bestandteilen EPDM (Polyolefinelastomer), Nitril-PVC, CSM (chlorsulfoniertes Polyethylen) ausgewählt wird.

3. Leitung nach Anspruch 2, **dadurch gekennzeichnet, dass** die Außenschicht unter den Polyamiden PA6, PA66, PA12 ausgewählt wird.

4. Leitung nach Anspruch 3, **dadurch gekennzeichnet, dass** das äußere Polyamid mit Glasfasern gefüllt ist.

5. Leitung nach Anspruch 1, **dadurch gekennzeichnet, dass** das Bindemittel ein Produkt auf Ethylen-, Acrylester- und Maleinsäureanhydridbasis ist.

6. Leitung nach einem der vorhergehenden Ansprüche, **dadurch gekennzeichnet, dass** sie eine Überzugsschicht (4) aus vulkanisiertem Elastomer umfasst, welche die Schicht (2) aus thermoplastischem Material überzieht und mit dieser über eine Zwischenschicht (5) eines Bindemittels aus einem Material verbunden ist, das mit der Überzugsschicht (4) und der Schicht (2) aus thermoplastischem Material kompatibel gemacht wurde.
